Europäisches Patentamt

European Patent Office

Office européen des brevets

(11) Publication number: 0 376 671
A2

# EUROPEAN PATENT APPLICATION

(21) Application number: 89313572.3

(51) Int. Cl.5: B29C 67/22

(22) Date of filing: 22.12.89

(30) Priority: 27.12.88 US 290598

(43) Date of publication of application:
04.07.90 Bulletin 90/27

(84) Designated Contracting States:
BE DE ES FR GB GR IT NL SE

(71) Applicant: THE DOW CHEMICAL COMPANY
2030 Dow Center Abbott Road
Midland, MI 48640(US)

(72) Inventor: Korb, Jean C.
32 Rue De La Loive
F-67800 Hoenheim(FR)
Inventor: Harfmann, Walter R.
1360 Acworth Due West Road
Kennesaw Georgia(US)

(74) Representative: Burford, Anthony Frederick et
al
W.H. Beck, Greener & Co. 7 Stone Buildings
Lincoln's Inn
London WC2A 3SZ(GB)

(54) Method and apparatus for preparing thermoplastic foam.

(57) Thermoplastic foam is prepared by a continuous process comprising melt mixing thermoplastic resin; pressurizing the resin melt; introducing blowing agent; cooling and depressurizing the resultant gel; and either foaming and forming the gel to form a solid foam or forming the gel to form a foamable composition. The process temperature is maintained substantially independently of the flow rate of the resin melt and gel at below that at which substantial degradation of the resin gel occurs. The process has particular application to rubber-modified polystyrene or rubber-modified polyethylene resin foam compositions containing a fire retardant.

EP 0 376 671 A2

## METHOD AND APPARATUS FOR PREPARING THERMOPLASTIC FOAM

The present invention relates generally to a method and an apparatus especially useful for low temperature preparation of thermoplastic foam compositions. The present invention also relates to novel foam compositions containing highly desirable amounts of rubber and fire retardant.

Commercial preparation of thermoplastic foam composition was disclosed in the 1930's. An early disclosure, Munter et al., U.S. Patent No. 2,023,204, teaches a batch process for preparation of foam boards wherein thermoplastic resin is melted in a pressurized vessel containing a blowing agent. A valve opening in the vessel allows the resin to foam directly into the outside air or into a shaping vessel.

With the advent of continuous foam processing utilizing extruder apparatuses, an improved foam product was made possible at lower cost thus resulting in widespread commercial use. Numerous processes were developed in efforts to improve the extruder apparatus and hence improve methods of preparation.

McIntire, U.S. Patent No. 2,515,250 discloses a continuous process for making thermoplastic foam compositions and an apparatus for preparing foam compositions which includes a separate temperature/pressure regulating zone located between an extruder and a pressurized storage vessel.

Winstead, U.S. Patent No. 3,830,901 discloses a continuous process for extruding thermoplastic foam compositions and an apparatus consisting of an extruder, a gear pump, a cooling zone and a die.

Presently, commercial production of thermo-plastic foam typically utilizes an apparatus in which an extruder is a means for melting and pressurizing a resin to a resin melt, and mixing additives and blowing agents with the melt to form a resin gel. Subsequently, the gel is forwarded through a cooling-depressurizing means and a foaming means.

The production of thermoplastic resin foam must necessarily be carried out above the glass transition temperature (Tg) or the melt temperature (Tm) of the resin. Above the Tg or Tm there exists an optimum temperature range for producing foam compositions possessing good structural integrity. Among the parameters which determine the optimum operational temperature are the weight average molecular weight (MW) distribution of the resin and the nature and amount of the additives in the resin gel. For example, the optimally desirable temperature range for processing a polystyrene resin gel of weight average MW of approximately 200,000 having a glass transition temperature of about 100°C (degrees centigrade) is in the range of about 140°C to about 195°C. Other temperature ranges apply to other resins and other resin/additive combinations.

In commonly used commercial processes for production of foam compositions at optimum production rates, the resin gel temperature ranges exceed optimum temperature ranges. For example, the temperature range for processing polystyrene gel usually ranges from about 200°C to about 250°C. The higher temperatures above 200°C occur when output rates exceed about 200 lbs/hr (90 kg/hr). The high gel temperatures at high production rates are attributed to thermal energy generated by shear forces created by extruder screw movement. Gel temperatures in excess of that required for melting the resin cause certain problems.

One problem arises when a fire retardant is introduced into the resin melt. At temperatures above about 190°C, commonly used halogenated fire retardants such as hexabromocyclododecane (HBCD), pentabromomonochlorocyclohexane (PBCH) and tetrabromobisphenol A (TBBA) exhibit sufficient degradation resulting in a significant amount of free radical degradation product. The free radicals react with the polymeric backbone of the resin gel resulting in chain scissions which reduce the weight average molecular weight (MW) of the resin. A lower MW resin undesirably effects the structural properties of the resultant foam composition.

One technique commonly employed to compensate for MW loss, is to initiate the foam-making process with a resin of higher average MW than the desired MW of the resultant foam composition. However, the use of higher MW resin does not completely solve temperature related degradation problems. As the MW of the resin increases, the viscosity of resin gel increases causing an increase in the shear forces in the extruder mixing chamber. In turn, increased shear forces create an increase in the resin gel temperature causing a further degradation in additives and resin.

A further drawback to high temperature processing concerns limitations on the types of foam compositions which can be produced. For example, foam compositions containing a high rubber content and also containing a desirably high content of a preferred fire retardant are not easily produced at high temperatures. The rubber phase of the resin gel degrades readily and halogenated fire retardants enhance the degradation process.

Because of the above-listed limitations and problems imposed on the preparation of foam using an

2

extruder it would be highly desirable to find an alternative method for preparing certain thermoplastic foam compositions.

The present invention provides a solution to the problems encountered in the preparation of thermoplastic resin foam at high throughput rates which cause undesirably high temperature ranges. Improved rubber-modified foam compositions can be produced at lower temperatures without sacrificing throughput rates by utilizing the apparatus and method of the present invention.

Briefly there are three major aspects to the invention. In one aspect, the present invention relates to novel foam products. For example, the novel foam product can be a thermoplastic resin foam composition comprising a rubber-modified polyethylene resin or a rubber-modified polystyrene resin and 0.01 weight percent to 5 weight percent by resin weight of a fire retardant wherein the rubber-modified resin has dispersed rubber particles in a polymeric matrix in an amount of 3 weight percent to 30 weight percent of the total resin weight. Other aspects of the invention relate to a method and an apparatus for continuous preparation of thermoplastic foam compositions; which method and apparatus demonstrate improved energy-efficient preparation of foam at low temperature ranges wherein the resin melt and resin gel temperatures are maintained essentially independently of the throughput rate. Thus, low temperature processing of foams is provided at high output rates.

In another aspect the present invention comprises a continuous method for preparation of a thermoplastic resin foam or foamable composition sequentially comprising the steps of:

(a) melting and mixing at least one thermoplastic resin to form a resin melt, the mixing process being carried out without applying shear forces of sufficient thermal energy to cause a localized rise in temperature to a temperature at which substantial degradation of the resin melt occurs;

(b) pressurizing to and maintaining the resin melt at a pressure sufficient to permit introduction of one or more blowing agents into the resin melt at a temperature below the temperature at which substantial degradation of the resin melt occurs;

(c) introducing and dispersing one or more blowing agents substantially throughout the resin melt to form a resin gel at a temperature above the glass transition temperature or the melt temperature of the thermoplastic resin and below a temperature at which substantial degradation of the resin gel occurs; and

(d) cooling and depressurizing the resin gel, the depressurizing being carried out at a sufficiently cool temperature for formation of a foam or foamable composition with structural integrity, and the cooling and depressurizing being carried out substantially at the same time;

(e) either foaming and forming the resin gel to form a solid foam composition or foaming the resin gel to form a solid foamable composition; the recited steps being carried out continuously in a series of stages with the temperature of the resin melt and gel being maintained substantially independently of the flow rate of the resin melt and gel advancing through and between the stages.

The method for preparation of thermoplastic resin foam compositions of the present invention provides an alternative to presently-used extrusion methods and a considerable improvement over batch methods. Optimum production rates can be maintained while allowing processing at lower gel temperatures.

In a still further aspect the present invention relates to an apparatus for continuous production of thermoplastic resin foam or foamable compositions by the method of this invention, said apparatus comprising:

(a) melting-mixing means for melting and mixing at least one thermoplastic resin to form a resin melt, the melting-mixing means having moving mixing elements and being adapted by the spacing between the moving mixing elements and interaction thereof to accomplish substantial mixing of the resin melt essentially without shear forces of sufficient thermal energy to cause a localized rise in the temperature of the resin melt to greater than 150° C above the glass transition temperature or melt temperature of the resin; the melting-mixing means having an inlet for the resin and an outlet for the resin melt, and means for causing the resin melt to discharge from the outlet;

(b) pump means for pressurizing the resin melt to a pressure in the range of 1000 pounds per square inch gauge (psig) (7000 kiloPascals gauge (kPag)) to 10,000 psig (70,000 kPag), the pump means having an inlet and an outlet and means for metering the resin melt through the outlet;

(c) pressurized mixing means for dispersing one or more blowing agents into the resin melt within a pressurized zone to form a resin gel, the pressurized mixing means being provided with an inlet for introducing the blowing agents, an inlet for the resin melt, and an outlet for discharging the resin gel under pressure;

(d) cooling-depressurizing means for concurrently cooling the resin gel within a pressurized zone and discharging the resin gel through a foam-forming die orifice means to form a solid foam composition; the cooling-depressurizing means having an inlet for receiving the resin gel under pressure and an outlet for the cooled gel; and

(e) conduit means providing fluid communication respectively and sequentially between the outlet of the melting-mixing means and the inlet of the pump means, between the outlet of the pump means and the inlet of the pressurized mixing means, between the outlet of the pressurized mixing means and the inlet of the cooling-depressurizing means and between the outlet of the cooling-depressurizing means and the foam-forming die orifice means.

Referring to the drawings,

Fig. 1 is a schematic diagram illustrating an embodiment of the apparatus of the present invention. This combination of equipment means produces continuously extruded thermoplastic foam compositions as further explained in Example 1;

Fig. 2 is a schematic diagram illustrating another embodiment of the apparatus of the present invention in which the means for pressurized mixing of blowing agents in the resin melt has been modified to comprise a combination of two modes for pressurized mixing means as further explained in Example 3.

One embodiment of the invention comprises novel rubber-modified polystyrene resin foam compositions and rubber-modified polyethylene resin foam compositions having about 0.01 weight percent to about 5 weight percent by resin weight of a fire retardant, preferably about 1 weight percent to about 3 weight percent, with the balance of the foam composition being rubber-modified polystyrene resin or rubber-modified polyethylene resin and any other additives, including blowing agents. The resin has dispersed rubber, preferably polymeric butadiene, particles in a polymeric matrix in an amount of about 3 weight percent to about 30 weight percent of the resin weight, preferably about 3 weight percent to about 22 weight percent, more preferably about 3 weight percent to about 16 weight percent. The fire retardant preferably is a halogenated compound from the group consisting of HBCD, PBCH and TBBA. The blowing agents and additives described in this specification are used in amounts that are well-known in the art.

The foam composition is essentially a closed cell rigid foam with a density ranging from at least about 1 pound per cubic foot (lb/ft$^3$) (16 kilograms per cubic meter (kg/m$^3$)) to about 10 lb/ft$^3$ (160 kg/m$^3$), preferably about 1.0 lb/ft$^3$ (16 kg/m$^3$) to about 5.0 lb/ft$^3$ (80 kg/m$^3$), more preferably about 1.0 lb/ ft$^3$ (16 kg/m$^3$) to about 2.5 lb/ft$^2$ (40 kg/m$^3$). The cell diameter ranges from about 0.1 mm (millimeter) to about 4 mm, preferably from about 0.2 mm to about 2.5 mm, more preferably from about 0.2 mm to about 1 mm.

Among the thermoplastic resins which can be utilized to produce corresponding foam compositions using the apparatus and method of the present invention are polymers such as styrenic polymers disclosed in Suh, U.S. Patent No. 4,085,073. Other olefinic polymers and copolymers can be foamed using this process such as polyethylene, low density polyethylene (LDPE), linear low density polyethylene (LLDPE), ultra low density polyethylene, copolymers of ethylene/vinyl acetate, high density polyethylene (HDPE), copolymers of ethylene/acrylic acid (EAA), polypropylene (PP), polyesters, polycarbonates, rubber modified polystyrenes, acrylonitrile-butadiene-polystyrene (ABS), polyvinyl chloride (PVC), polyvinylidene copolymers, high bromine containing rubber modified polystyrene, ethylenic ionomers, styrenic ionomers and mixtures thereof.

Among the blowing agents which can be used are halocarbons and halohydrocarbons such as chlorofluorocarbons and fluorocarbons, chlorofluorohydrocarbons and fluorohydrocarbons, water, carbon dioxide, halogenated lower alkyls such as methyl and ethyl chloride, lower alkyls containing one to about 6 carbon atoms such as butane, nitrogen gas, and oxygen gas. Preferred blowing agents comprise the halohydrocarbons such as fluorohydrocarbons or chlorofluorohydrocarbons containing at least one hydrogen atom attached to a carbon atom, water, carbon dioxide, methyl chloride and ethyl chloride and mixtures thereof.

Additives which may be mixed with the thermoplastic resin to make a thermoplastic resin melt include fire retardants, cell nucleating agents, cell enlarging agents, plasticizers, acid scavengers, colorants, antioxidants, lubricants, antistatic agents and corrosion inhibitors among others.

Among the fire retardants which can be used and are preferred are bromine containing cycloalkyls, most preferably HBCD, PBCH, and TBBA.

Cell nucleating agents include but are not limited to talc, indigo, phthalocyanine blue, magnesium oxide and metal stearates. Preferred cell nucleating agents include talc, indigo, magnesium oxide and metal stearates. The more preferred cell nucleating agent is talc.

Among the cell enlarging agents are waxy materials, LDPE, and LLDPE. Preferred cell enlarging agents comprise LDPE and LLDPE.

Among the plasticizers are saturated aliphatic oils containing about 1 to about 22 carbon atoms. Preferred plasticizers are diacetyl phthalate, dihexyl phthalate, and saturated aliphatic oils such as mineral oil.

Acid scavengers include but are not limited to magnesium oxide and tetrasodiumpyrophosphate (TSPP).

4

A novel aspect of the invention is that the melting-mixing and pressurizing of the resin melt and any dispersion therein of blowing agents to form a thermoplastic foam product are each carried out as individually controlled steps thereby permitting the gel temperature to be controlled essentially independently of the throughput rate without raising the resin temperature by the work put into it. Thus, low temperature continuous preparation of thermoplastic resin foam compositions at advantageous throughput rates is enhanced and assured.

In steps (a) through (c) of the above-mentioned method of the present invention, the temperature of the resin gel can range from about 40°C to about 150°C above the glass transition temperature (Tg) or melt temperature (Tm) of the resin, preferably from about 40°C to about 100°C above the Tg or Tm and more preferably from about 50°C to about 90°C above the Tg or Tm.

The melting-mixing step (a) preferably includes pre-pressurizing of the resin melt to a pressure in the range from about 0.01 psig (0.07 kPag) to about 980 psig (6800 kPag), preferably from about 0.01 psig (0.07 kPag) to about 500 psig (3500 kPag), and most preferably from about 0.01 psig (0.07 kPag) to about 100 psig (700 kPag).

The pressure in pressurizing step (b) and the pressurizing mixing step (c) usually ranges from about 1000 psig (7000 kPag) to about 10,000 psig (70,000 kPag), preferably about 1000 psig (7000 kPag) to about 5000 psig (35,000 kPag), and more preferably from about 1500 psig (10,000 kPag) to about 3000 psig (21,000 kPag).

The conditions for cooling, depressurizing and foaming can be those commonly used in the art such as disclosed in Corbett et al., U.S. Patent No. 3,770,668 and McCurdy et al., U.S. Patent No. 2,669,751.

Corbett et al. discloses styrenic polymer foams and methods and apparatus for extrusion thereof. McCurdy et al. discloses an improved process for the preparation of thermoplastic foam. One feature of the improvement is a method for mixing and cooling of the resin gel in a vessel downstream from an extruder.

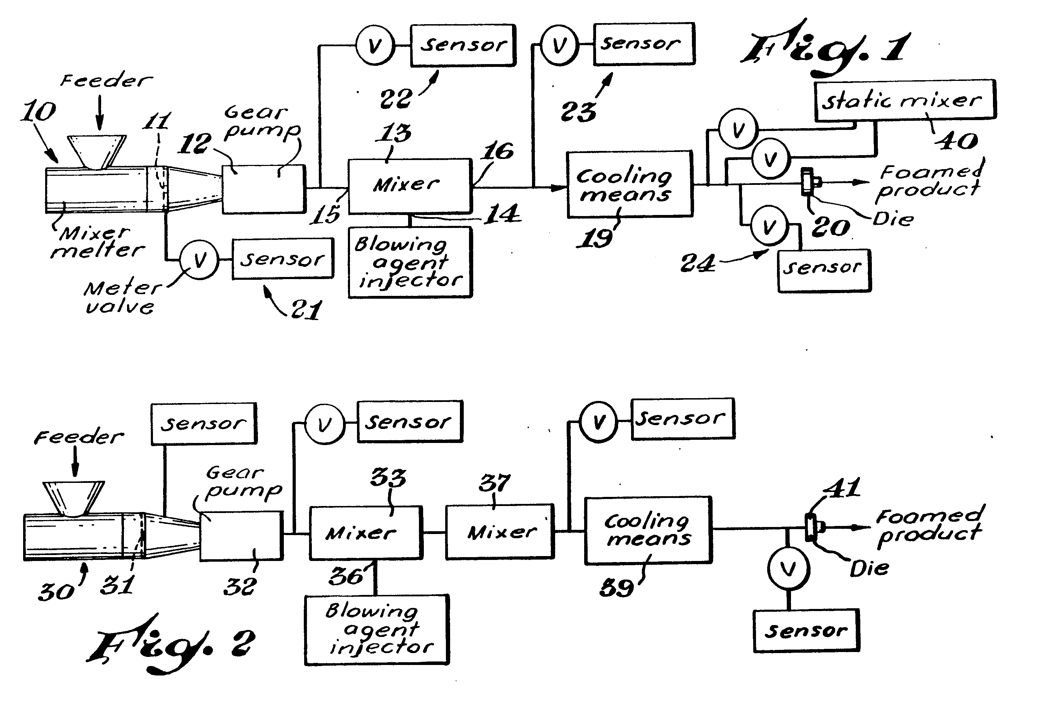

One embodiment of an apparatus suitable for carrying out the process of the invention is shown in Fig. 1. Such apparatus can be employed for continuous production of thermoplastic resin foam compositions. Included is a melting-mixing means 10 for melting at least one thermoplastic resin to a liquid state and mixing the resin to form a resin melt. It is essential that the melting-mixing means have moving mixing elements that are adapted by spacing between the moving mixing elements and interaction thereof to accomplish substantial mixing of the resin substantially without sufficient shear to cause a localized temperature rise at which substantial degradation of the resin occurs.

In a preferred embodiment for making resin foam compositions the melting-mixing means 10 is adapted to accomplish substantial mixing without sufficient shear to cause a localized temperature rise in the temperature of the resin melt to greater than about 40°C to about 150°C above the Tg or Tm of the resin, but preferably without raising the temperature from about 40°C to about 100°C above the Tg or Tm and more preferably to no more than about 50°C to 90°C above the Tg or Tm. The moving mixing elements in melting-mixing means 10 are preferably twin spaced apart screws each having spiral flights thereabout.

Suitably, the mixing screws are spaced about 0.125 inches (in) (0.32 centimeter(cm)) to about 0.25 in (0.65 cm) apart to avoid unwanted shear action. The mixing screws are mounted within a chamber or vessel having heating and cooling elements externally attached to the chamber wall. The mixing chamber is also provided with an inlet for continuous feed of thermoplastic resin, usually in particulate or pelletized form. The chamber at the discharge end of the chamber is provided with an outlet 11 for discharge of resin melt into a conduit leading to the inlet of a suitable pump means 12.

The means for causing resin melt to discharge from the outlet of the melting-mixing means may be gravity flow, e.g. by vertical disposition of the mixer, or the action of the moving mixing means but preferably is a pre-pressurizing means adjacent the outlet adapted to discharge resin melt at a pressure up to about 980 psig (6800 kPag). Preferably, the pre-pressurizing means is a modified distal section of the moving mixing elements of the melting-mixing means adapted to discharge resin melt at a pressure preferably in the range of about 0.01 psig (0.07 kPag) to about 100 psig (700 kPag). The pressurized resin melt exiting the pump 12 via an outlet is led through a conduit to the inlet of pressurized mixing means 13.

A preferred melting-mixing means is a modification of a compounder or a continuous mixer as disclosed in Ahlefeld, Jr. et al., U.S. Patent No. 3,154,808.

The pump means 12 is preferably a gear pump and is used for pressurizing the resin melt to a pressure in the range of about 1000 psig (7000 kPag) to about 10,000 psig (70,000 kPag), preferably from about 1500 psig (10,000 kPag) to about 3000 psig (21,000 kPag). The pump means 12 has an outlet and means for metering resin melt through the outlet. The pump means used must be capable of handling a rather viscous resin melt and function without causing substantial temperature rise of the melt.

The pressurized mixing means 13 is used for dispersing blowing agent material into the resin melt within a pressurized zone. The pressurized mixing means may be most any mixing vessel or chamber

5

equipped with mixing elements and adapted to receive and mix resin melt and blowing agents under a preselected pressure in the range of about 1,000 psig (7000 kPag) to about 10,000 psig (70,000 kPag), the pressure being sufficient to maintain the blowing agents in a substantially miscible form in the melt. While the resin melt is fed continuously into the pressurized mixing means through an inlet 15 under the preselected pressure the blowing agents are continuously injected into the mixing chamber through another inlet 14. The mixing elements may for example be pins projecting in opposed directions from a cylindrical rotor and a surrounding stator, or the mixing may be accomplished with a cavity-transfer mixer with an overlapping array of cup shaped concave recesses in each of the rotor and the stator and a relatively small annular spacing. A combination of mixing means may be employed to disperse blowing agent material in the resin melt.

Preferably, the pressurized mixing means 13 of Fig. 1 is an in-line kinetic mixer, an example of which is disclosed by McCurdy et al., U.S. Patent No. 2,669,751. In another preferred embodiment the pressurized mixing means 13 comprises a cavity-transfer mixer. Cavity-transfer mixers are disclosed in Gale, U.S. Patent No. 4,419,014.

It is desirable to get substantially homogeneous dispersion of the blowing agent in the resin melt to form a resin gel while at the same time not generating excessive local heating because of mechanical work input.

It is essential to maintain a pre-selected pressure in the mixing chamber and keep the blowing agent from forming a foam until the gel subsequently is released through a foam forming orifice.

The resin gel is discharged under pressure from the pressurized mixing means 13 through outlet 16 and through a conduit to the inlet of the cooling-depressurizing means 19. The cooled gel exits the cooling-pressurizing means at an outlet and enters the foam-forming die orifice means 20. After the gel leaves the die orifice, the gel is formed into a foam or foamable composition. The particular shape and properties of the resin foam composition are further controlled after the gel exits the die orifice using temperature and pressure modifying means.

The cooling-depressurizing means and the foam-forming die orifice means may take the form of most any of the equipment known in the art for the purpose of making foam. Entirely suitable and preferred equipment is described in Corbett, U.S. Patent No. 3,770,668.

If desired, in order to assure more uniform cell size in the foam product it may be desirable to pass the cooled resin gel, while still under pressure, through a static mixer 40, or series of static mixers before releasing the pressurized gel to a reduced pressure, e.g. ambient atmospheric pressure, through a typical foam-forming die orifice. The foam forming at the orifice will be directed into making foam sheets, foam boards, foam particles and other typically extruded foam compositions using the appropriate post-die forming means such as a mandrel, forming shoes, forming plates and other typical post-die orifice means as well understood in the art. Foamable compositions can also be made.

In order to monitor the temperature and pressure of the resin melt and resin gel throughout the system a metering sensor means 21 connected to the output of the melting-mixing means 10 is provided; a metering sensor means 22 connected to the conduit between the pump means 12 and pressurized mixing means 13 is provided; a metering sensor means 23 connected to the conduit between the pressurized mixing means 13 and the cooling-depressurizing means 19 is provided; and a metering sensor means 24 connected to the conduit between the cooling-depressurizing means 19 and the foam-forming die orifice means 20 is provided.

Another embodiment of the apparatus production line of the invention is shown in Fig. 2, which is similar to Fig. 1 with the exception of a modification of the pressurized mixing means 13 as illustrated. A melting-mixing means 30 corresponds to the melting-mixing means 10 of Fig. 1. A pump means 32 corresponds to the pump means 12 of Fig. 1. The essential difference between the figures is that the pressurized mixing means 13 of Fig. 1 is replaced by a pressurized mixing means 33 and a second pressurized mixing means 37. Pressurized mixing means 33 comprises an in-line kinetic device such as a spline mixer and pressurized mixing means 37 comprises a cavity-transfer mixer. This arrangement of mixing devices is preferable when processing resin melts or gels at or near the Tg or Tm of the resin. In a further embodiment it may be preferable for pressurized mixing means 33 to comprise a cavity-transfer mixer and pressurized mixing means 37 to comprise a spline mixer.

Example 1 - Production of High Bromine Containing Polystyrene Foam

Equipment

Fig. 1 illustrates schematically apparatus used in a pilot line to produce polystyrene foam compositions containing high levels of bromine. The melting-mixing means 10 is a Farrel 2CM Continuous Mixer™ brand mixer (Pomini Farrel Corp., Castellanza, Italy). The pump means 12 is a Luwa Vacorex Gear Pump™ brand gear pump (Maag-Luwa Corp., Zurich, Switzerland). The pressurized mixing means 13 is an in-line kinetic mixing device as disclosed by McCurdy et al., U.S. Patent No. 2,669,751. The cooling-depressurizing means 19, and foam-forming die orifice means 20 of Fig. 1 are as disclosed in Corbett et al., U.S. Patent No. 3,770,668. The optional static mixer mixing means 40 of Fig. 1, directly preceding the foam-forming die orifice is of conventional design and is optionally included to improve uniformity of foam composition.

The apparatus is clad substantially throughout by an insulating jacket and the temperature and pressure readings are monitored with metering and sensor means 21, 22, 23 and 24, Fig. 1. The temperature of the mixing chamber and the the mixing chamber orifice is controlled through the use of electric heaters and cooling devices and the temperatures of the remaining portions of the apparatus are independently controlled through the use of jacket insulation standard in the industry.

Method

Using the equipment described above a series of polystyrene foam samples are produced containing different amounts of hexabromocyclododecane (HBCD). This fire retardant is added to the thermoplastic resin melt in proportions in the range of 1.4 weight percent to 3.3 weight percent.

Table I shows various formulations of the thermoplastic resin composition processed at a production rate of 200 lbs (90 kg) per hour. Table III shows the actual amount of fire retardant in each sample formulation.

TABLE I

| Foam Composition and Feed Rate | | |
|---|---|---|
| MATERIAL | FEED RATE IN LB/HR | FEED RATE IN KG/HR |
| Polystyrene (weight average MW of about 200,000) | 200 | 91 |
| HBCD | Varied as indicated* | |
| Magnesium Oxide | 0.15 | 0.07 |
| Talc | 0.60 | 0.27 |
| Low Density Polyethylene (LDPE) | 0.26 | 0.12 |
| Tetrasodiumpyrophosphate (TSPP) | 0.30 | 0.14 |
| Ethyl Chloride | 7.6 | 3.4 |
| Dichlorodifluoromethane (CFC-12) | 15.2 | 6.9 |
| Carbon Dioxide | 2.2 | 1.0 |

*1.4 weight percent to 3.3 weight percent of the resin as represented in Table III.

Table II shows temperatures, pressures and production rates at various points in the system including the Farrel Continuous Mixer (FCM), the gear pump, and the in-line kinetic mixer (IKM).

7

TABLE II

| PROCESS CONDITIONS | | | | | | |
|---|---|---|---|---|---|---|
| **Process Temperatures deg C** | | | | | | |
| **Sample** | | | | | | |
| | 1 | 2 | 3 | 4 | 5 | 6 |
| Out FCM<br>Out Gear Pump<br>Out IKM<br>Die | 162.8<br>164.1<br>181.8<br>125.0 | 162.3<br>163.1<br>181.5<br>125.1 | 163.1<br>164.5<br>181.8<br>125.0 | 162.6<br>163.1<br>180.9<br>125.0 | 162.7<br>164.2<br>181.6<br>125.1 | 162.3<br>163.2<br>181.1<br>125.0 |
| **Process Pressures psig (kPag)** | | | | | | |
| Out Gear Pump | 2260<br>(15580) | 2310<br>(15930) | 2210<br>(15210) | 2220<br>(15307) | 2200<br>(15170) | 2200<br>(15170) |
| Out IKM | 1780<br>(12270) | 1700<br>(11720) | 1730<br>(11930) | 1740<br>(12000) | 1720<br>(11859) | 1710<br>(11790) |
| **Board Speed ft/min (m/min)** | | | | | | |
| | 56.4<br>(17.2) | 57.2<br>(17.4) | 56.5<br>(17.2) | 57.0<br>17.4) | 53.2<br>(16.2) | 55.7<br>(17.0) |

The maximum processing resin gel temperature of any sample is under 185° C. The density of all foam product samples is approximately 2.1 lb/ft$^3$ (33.6 kg/m$^3$). The cell size of all foam product samples is between 0.3 and 0.4 millimeters.

Table III shows the densities and cell sizes of the samples as a measure of quality of foam product. The amount of fire retardant is varied while density and cell size remain substantially uniform and constant as demonstrated using standard ASTM testing methods.

Visual examination of various portions of the foam shows no instances of any evidence of thermal degradation of either the resin or the fire retardant.

TABLE III

| Foam Properties as a Function of Bromine Content | | | | |
|---|---|---|---|---|
| Sample | Weight Percent HBCD in Resin | Weight Percent Bromine in Resin | Density lb/ft$^3$ (kg/m$^3$) | Cell Size (mm) |
| 1 | 1.4 | .90 | 2.10<br>(33.6) | .36 |
| 2 | 1.8 | 1.16 | 2.10<br>(33.6) | .37 |
| 3 | 2.2 | 1.41 | 2.11<br>(33.8) | .34 |
| 4 | 2.5 | 1.60 | 2.10<br>(33.6) | .35 |
| 5 | 2.9 | 1.88 | 2.08<br>(33.3) | .35 |
| 6 | 3.3 | 2.05 | 2.11<br>(33.8) | .35 |

Example 2 - Production of Rubber-Modified Polystyrene Foam With Desirable Levels of Fire Retardant

A pilot plant line corresponding to the apparatus of Example 1 is employed to produce rubber-modified polystyrene (RMPS) foam composition samples with desirably high levels of preferred fire retardant.

The processing is initiated with a virgin feed of polystyrene and subsequently the polymeric feed is switched to a rubber-modified polystyrene resin wherein the polystyrene is of weight average MW in the range of 200,000 +/- 1,000 and contains dispersed polymeric butadiene particles in an amount of about 8.5 weight percent of the resin weight. The process is controlled to give a foam-forming die orifice pressure of 700 ± 100 psig (4800 ± 700 kPa). The temperature in mixing chamber and at the outlet of the Farrel Continuous Mixer (FCM), the melting-mixing means 10, is maintained at about 175°C. The gear pump speed is adjusted to give output rates of about 200 lbs/hr (90 kg/hr).

The resin formulations of the seven foam samples are given in Table IV. The amount of two of the blowing agents, ethyl chloride and carbon dioxide are varied between the resin formulations as carbon dioxide is used to enhance cell nucleation. The weight percent units are based on the weight of RMPS.

TABLE IV

| FORMULATION DATA | | | | | | | | |
|---|---|---|---|---|---|---|---|---|
| Resin Composition | Units | Samples | | | | | | |
| | | 1 | 2 | 3 | 4 | 5 | 6 | 7 |
| RMPS | lb/hr | 200 | 200 | 200 | 200 | 200 | 200 | 200 |
| | kg/hr | 90 | 90 | 90 | 90 | 90 | 90 | 90 |
| HBCD | weight percent | 1.6 | 1.6 | 1.6 | 1.6 | 1.6 | 1.6 | 1.6 |
| Talc - 15% Conc. in polystyrene | weight percent | 0.4 | 0.4 | 0.4 | 0.4 | 0.4 | 0.4 | 0.4 |
| Magnesium Oxide | weight percent | 0.1 | 0.1 | 0.1 | 0.1 | 0.1 | 0.1 | 0.1 |
| Difluorodichloromethane | weight percent | 6.1 | 6.1 | 6.1 | 6.1 | 6.1 | 6.1 | 6.1 |
| Ethyl Chloride | weight percent | 4.0 | 2.6 | 2.6 | 2.6 | 2.6 | 2.6 | 2.6 |
| Carbon Dioxide | weight percent | 1.1 | 2.0 | 2.9 | 2.4 | 2.9 | 2.4 | 2.9 |

The process variables used to produce the seven foam samples are listed in Table V.

TABLE V

| PROCESS VARIABLES | | | | | | | | |
|---|---|---|---|---|---|---|---|---|
| | Units | Samples | | | | | | |
| | | 1 | 2 | 3 | 4 | 5 | 6 | 7 |
| Feed Rate of RMPS | lb/hr kg/hr | 200 90 | 200 90 | 200 90 | 200 90 | 200 90 | 200 90 | 200 90 |
| Sample Width | inch mm | 5.8 147 | 4.6 117 | 4.3 109 | 4.6 117 | 4.6 117 | 3.7 94 | 4.1 104 |
| Sample Thickness | inch mm | 1.0 25 | 0.9 23 | 0.9 23 | 0.9 23 | 0.8 20 | 0.8 20 | 0.9 23 |
| Board Speed | ft/min m/min | -- -- | -- -- | 79 24 | 67 20 | 75 23 | 95 29 | -- -- |
| System Temperatures | | | | | | | | |
| Out FCM Out Gear Pump Out IKM | °C °C °C | 169 169 191 | 170 169 190 | 171 171 190 | 170 171 191 | 170 170 189 | 170 171 190 | 170 170 189 |
| System Pressures | | | | | | | | |
| FCM Outlet | psig Kpag | <10 <69 | <10 <69 | <10 <69 | <10 <69 | <10 <69 | <10 <69 | <10 <69 |
| Gear Pump Outlet | psig kPag | 2720 18,750 | 2510 17,310 | 2530 17,440 | 2750 18,960 | 2680 18,480 | 2550 17,580 | ---- ---- |

The density and cell size for the resultant foam samples are shown in Table VI. The density ranges from about 1.4 lb/ft³ (22.4 kg/m³) to about 2.3 lb/ft³ (36.8 kg/m³) and the cell size ranges from about 0.5 mm to about 1.7 mm in diameter. These results indicate that blowing agent efficiency is maintained. No evidence of thermal degradation of resin or fire retardant is found in any of the samples upon visual examination.

TABLE VI

| FOAM PROPERTY DATA | | | | | | | | |
|---|---|---|---|---|---|---|---|---|
| Sample | Units | 1 | 2 | 3 | 4 | 5 | 6 | 7 |
| Density ASTM Test D-1622 | lb/ft³ kg/m³ | 2.30 36.8 | 1.74 27.9 | 1.63 26.1 | 1.80 28.8 | 1.81 29.0 | 1.66 26.6 | 1.38 22.1 |
| Cell Size ASTM Test D-3176 | mm | 1.74 | 0.79 | 0.57 | 0.59 | 0.58 | 0.63 | 0.50 |

Example 3 - for Production of Polystyrene Foam Under Low Temperature Conditions

Utilizing the apparatus of Fig. 2, a thermoplastic polystyrene resin foam composition is produced utilizing as the melting-mixing means 30 a Farrel FCM Continuous Mixer™ brand mixer, model 6UM (Farrel Company, Ansonia, CT); as the pump means 31, a Luwa Vacorex Gear Pump™ brand gear pump (Maag-Luwa Corp., Zurich, Switzerland); as the pressurized mixers 33 and 37 in tandem, an in-line kinetic mixer as

10

disclosed in McCurdy et al., U.S. Patent No. 2,669,751 and a cavity-transfer mixer; a conventional cooling-depressurizing means 39 such as that disclosed in Corbett et al., and a conventional foam-forming die orifice means 41.

Resin and additives listed in Table IX are fed into the mixing chamber of the melting-mixing means 30. The blowing agents, introduced into the first pressurized mixing means 33 at point 36 are about 7 percent by weight of difluorodichloromethane, about 1.5 percent by weight $CO_2$ and about 3 percent by weight ethyl chloride, based on the total resin gel composition.

The preferred operating temperature range is about 140°C to about 195°C. The resin melt temperature is about 140°C to about 185°C. The resin gel temperature is about 150°C to about 190°C. The gear pump input pressure is about 0.01 psig (0.07 kPag) to about 50 psig (350 kPag). The gear pump output pressure is about 1500 psig (10,300 kPag) to about 2500 psig (17,200 kPag).

No evidence of thermal degradation is found in the product.

TABLE IX

| RESIN FORMULATION | |
| --- | --- |
| Ingredient | Weight % |
| Polystyrene (about 200,000 MW) | about 84.045% by weight |
| HBCD | 3.0% |
| Magnesium Oxide | 0.015% |
| TSPP | 0.15% |
| LDPE | 0.1% |
| Barium or Calcium Stearate | 0.15% |
| Talc | 1.0% |

**Claims**

1. A continuous method of preparation of a thermoplastic resin foam or foamable composition comprising sequentially the steps of:

(a) melting and mixing at least one thermoplastic resin to form a resin melt, the mixing process being carried out without applying shear forces of sufficient thermal energy to cause a localized rise in temperature of the resin melt to a temperature at which substantial degradation of the resin occurs;

(b) pressurizing to and maintaining the resin melt at a pressure sufficient to permit introduction of one or more blowing agents into the resin melt at a temperature below the temperature at which substantial degradation of the resin melt occurs;

(c) introducing and dispersing the one or more blowing agents substantially throughout the resin melt to form a resin gel at a temperature above the glass transition temperature or the melt temperature of the thermoplastic resin and below a temperature at which substantial degradation of the resin gel occurs; and

(d) cooling and depressurizing the resin gel, the depressurizing being carried out at a sufficiently cool temperature for formation of a foam or foamable composition with structural integrity, and the cooling and depressurizing being carried out substantially at the same time;

(e) either foaming and forming the resin gel to form a solid foam composition or foaming the resin gel to form a solid foamable composition;

the recited steps being carried out continuously in a series of stages with the temperature of the resin melt and gel being maintained substantially independently of the flow rate of the resin melt and gel advancing through and between the stages.

2. A method as claimed in Claim 1, wherein the resin is selected from polystyrene, rubber-modified polystyrene, and rubber-modified polyethylene.

3. A method as claimed in Claim 2, wherein the resin is selected from rubber modified polystyrene or polyethylene containing 3 to 30 weight percent (based on total resin weight) dispersed polymeric butadiene particles.

4. A method as claimed in any one of the preceding claims, wherein the resin contains 0.01 to 5 weight percent (based on total resin weight) of a fire-retardant.

5. A method as claimed in Claim 4 wherein the fire retardant is selected from hexabromocyclododecane, pentabromomonochlorocyclohexane and tetrabromobisphenol A.

6. A method as claimed in any one of the preceding claims, wherein the resin melt is pre-pressurized prior to step (b) to a pressure range from 0.07 kPag (0.01 psig) to 7,000 kPag (980 psig).

7. A method as claimed in any one of the preceding claims, wherein the pressure of step (b) is from 7,000 kPag(1000 psig) to 70,000 kPag(10,000 psig).

8. An apparatus for continuous production of thermoplastic resin foam or foamable compositions by a method as claimed in Claim 1, said apparatus comprising:

(a) melting-mixing means for melting and mixing a resin to form a resin melt, the melting-mixing means having moving mixing elements and being adapted by the spacing between the moving mixing elements and interaction thereof to accomplish substantial mixing of the resin melt essentially without shear forces of sufficient thermal energy to cause a localized temperature rise in the temperature of the resin melt to greater than 150°C above the glass transition temperature or the melt temperature of the resin, the melting-mixing means having an inlet for the resin and an outlet for the resin melt, and means for causing the resin melt to discharge from the outlet;

(b) pump means for pressurizing the resin melt to a pressure in the range of 7,000 kPag(1000 psig) to 70,000 kPag(10,000 psig), the pump means having an inlet and an outlet and means for metering the resin melt through the outlet;

(c) pressurized mixing means for dispersing blowing agents in the resin melt within a pressurized zone to form a resin gel, the pressurized mixing means being provided with an inlet for introducing the blowing agents, an inlet for the resin melt, and an outlet for discharging the resin gel under pressure;

(d) cooling-depressurizing means for concurrently cooling and depressurizing the resin gel to a temperature and pressure sufficient for discharging the resin gel throuah a foam-forming die orifice means; the cooling-depressurizing means having an inlet for receiving the resin gel under pressure and an outlet for the cooled gel; and

(e) conduit means providing fluid communication respectively and sequentially between the outlet of the melting-mixing means and the inlet of the pump means, between the outlet of the pump means and the inlet of the pressurized mixing means, between the outlet of the pressurized mixing means and the inlet of the cooling-depressurizing means and between the outlet of the cooling-depressurizing means and the foam-forming die orifice means.

9. An apparatus as claimed in Claim 8, wherein the moving mixing elements of the melting-mixing means are twin spaced-apart screws having spiral flights thereabout.

10. An apparatus as claimed in Claim 8 or Claim 9, wherein the pre-pressurizing means comprises a modified distal section of the moving mixing elements of the melting-mixing means.

11. An apparatus as claimed in any one of Claims 8 to 10, wherein the pump means comprises a gear pump.

12. A thermoplastic foam composition comprising a resin selected from the group consisting of: rubber-modified polystyrene resin and rubber-modified polyethylene resin; and 0.01 weight percent to weight percent by resin weight of a fire retardant wherein the resin has 3 weight percent to 30 weight percent rubber based on total resin weight.

EP 0 376 671 A2

## Fig. 1

Feeder

10

11

12

Gear pump

Mixer melter

Meter valve

Sensor

21

(V) Sensor

22

13

Mixer

15

16

14

Blowing agent injector

(V) Sensor

23

Cooling means

19

(V)

(V)

(V)

24

Sensor

Static mixer

40

Foamed product

Die

20

## Fig. 2

Feeder

Sensor

(V) Sensor

Gear pump

30

31

32

Mixer

33

36

Blowing agent injector

Mixer

37

(V) Sensor

Cooling means

39

41

Die

(V)

Sensor

Foamed product